Europäisches Patentamt

European Patent Office

Office européen des brevets

(11) Veröffentlichungsnummer: **0 344 121 B1**

# (12) EUROPÄISCHE PATENTSCHRIFT

(45) Veröffentlichungstag der Patentschrift:
08.01.92 Patentblatt 92/02

(51) Int. Cl.$^5$: **B25D 17/08, B23B 51/00**

(21) Anmeldenummer: **89810380.9**

(22) Anmeldetag: **22.05.89**

(54) Werkzeug mit Längsnuten am Einsteckende.

(30) Priorität: **25.05.88 DE 3817644**

(43) Veröffentlichungstag der Anmeldung:
**29.11.89 Patentblatt 89/48**

(45) Bekanntmachung des Hinweises auf die
Patenterteilung:
**08.01.92 Patentblatt 92/02**

(84) Benannte Vertragsstaaten:
**AT BE CH DE FR GB IT LI NL SE**

(56) Entgegenhaltungen:
**DE-A- 2 551 125
DE-A- 3 239 875
GB-A- 2 136 724
US-A- 2 529 396**

(73) Patentinhaber: **HILTI Aktiengesellschaft
FL-9494 Schaan (LI)**

(72) Erfinder: **Knoller, Anton
Dr.-Baur-Strasse 1
W-8910 Landsberg am Lech (DE)**
Erfinder: **Kunert, Peter
Thüringerstrasse 17
W-8912 Kaufering (DE)**
Erfinder: **Soehnlein, Dieter
Ahornring 106
W-8912 Kaufering (DE)**

(74) Vertreter: **Wildi, Roland
Hilti Aktiengesellschaft Patentabteilung
FL-9494 Schaan (LI)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Bohr- oder Meisselwerkzeug mit Schaft und entgegen der Vorschubrichtung rückwärtig daran anschliessendem Einsteckende, das axial verlaufende Längsnuten aufweist, welche der drehschlüssigen Verbindung und der axialen Halterung mit einer Aufnahme eines Antriebsgerätes dienen.

Werkzeuge der genannten Art sind beispielsweise aus der DE-PS 2551125 bekannt und werden insbesondere bei der Gesteinsbearbeitung eingesetzt. Beim Einsetzen der Werkzeuge in eine Aufnahme eines Antriebsgerätes greifen feststehende oder radial ausrückbare Verriegelungselemente formschlüssig in die axial verlaufenden Längsnuten ein. Ueber die Verriegelungselemente kann einerseits ein Drehmoment auf das Werkzeug übertragen und andererseits ein Herausstossen des Werkzeuges aus der Aufnahme verhindert werden.

Im Betrieb führen die Bohr- und Meisselwerkzeuge in der Aufnahme des Antriebsgerätes eine in Achsrichtung gerichtete Längsbewegung auf. Durch diese Längsbewegung entsteht an den Längsnuten sowie an den darin eingreifenden Verriegelungselementen der Aufnahme ein relativ starker Verschleiss. Ausserdem sind diese Längsnuten anfällig auf Verschmutzungen, welche zu Störungen der Aufnahme führen können, so dass sich die Werkzeuge nicht mehr richtig verriegeln lassen und im Betrieb aus der Aufnahme herausgestossen werden können.

Der Erfindung liegt die Aufgabe zugrunde, ein Werkzeug mit einem mit Längsnuten versehenen Einsteckende zu schaffen, das gegen Verschleiss und Verschmutzungen unempfindlich ist.

Gemäss der Erfindung wird dies dadurch erreicht, dass wenigstens ein Teil der Längsnuten wenigstens im Nutengrund eine Profilierung mit im wesentlichen in Achsrichtung wirkenden Anschlagflächen aufweist.

Durch die Profilierung des Nutengrundes entstehen einzelne Taschen, welche vor dem Einsatz des Werkzeuges mit Schmiermittel, beispielsweise mit Fett, gefüllt werden können. Die Erhebungen der Profilierung dienen als Schmutzabstreifer, wobei der abgestreifte Schmutz in den Taschen der Profilierung aufgenommen wird. Durch den in den Taschen abgelagerten Schmutz wird ein Teil des Schmiermittels aus den Taschen verdrängt, was zu einer Schmierung der übrigen Teile der Längsnuten führt. Durch diese Schmierung wird bei einer Axialbewegung des Werkzeuges der Verschleiss am Einsteckende sowie an den in die Längsnuten eingreifenden Verriegelungselementen der Aufnahme wesentlich herabgesetzt.

Die Profilierung ist zweckmässig zahnstangenförmig ausgebildet, so dass gleichmässig über die Länge der Längsnut verteilt angeordnete Taschen entstehen.

Der Flankenwinkel der Zähne der Profilierung gegenüber der Werkzeugachse beträgt vorteilhaft 30° bis 60°. Ein in dieser Grössenordnung liegender Flankenwinkel fördert die spanlose Formgebung und schafft Kanten, die ein Abstreifen von Verschmutzungen erleichtern. Zudem bilden sich zwischen den einzelnen Zähnen ausreichende Taschen für die Aufnahme von Schmiermittel.

Die Profilierung ist zweckmässigerweise durch Vertiefungen gebildet. Die Vertiefungen können beispielsweise kegelförmig oder pyramidenförmig ausgebildet werden. Derartige pyramidenförmige Vertiefungen führen zu einer geringen Kerbwirkung im Nutengrund, da sich die grösste Tiefe lediglich an einem Punkt befindet und die Tiefe von diesem Punkt nach allen Seiten hin abnimmt. Ausserdem darf die optisch verteilhafte Wirkung einer solchen Profilierung nicht ausser acht gelassen werden.

Die Seitenlänge der Vertiefungen entspricht vorteilhafterweise im wesentlichen der Breite der Längsnut im Nutengrund. Die Profilierung erstreckt sich somit im wesentlichen über die gesamte Breite der Längsnut. Dies bedeutet, dass ein in die Längsnut eingreifendes Verriegelungselement einer Aufnahme durch die Profilierung vollständig abgestreift, dabei gereinigt und gegebenenfalls mit einem in den Taschen der Profilierung enthaltenen Schmiermittel beschichtet wird.

Das Einsteckende weist zweckmässig zwei einander diametral gegenüberliegende, axial geschlossene Längsnuten und zwei gegenüber diesen um 90° versetzt angeordnete, zum rückwärtigen Ende hin offene, im Nutengrund mit der Profilierung versehene Längsnuten auf. Die axial geschlossenen Längsnuten sind beispielsweise für den Eingriff von radial verschiebbaren Verriegelungselementen vorgesehen und dienen der axialen Halterung in der Aufnahme. Die zum rückwärtigen Ende hin offenen, im Nutengrund mit der Profilierung versehenen Längsnuten dienen der Drehmitnahme und wirken beispielsweise mit als radial unverschieblichen Vorsprüngen ausgebildeten Verriegelungselementen der Aufnahme zusammen. Die Profilierung im Nutengrund der zum rückwärtigen Ende hin offenen Längsnuten ermöglicht zusammen mit diesen Vorsprüngen bei jedem Einsetzen des Werkzeuges in eine Aufnahme einen Reinigungsvorgang der offenen Längsnut.

Die zum rückwärtigen Ende hin offenen Längsnuten weisen vorteilhaft einen im wesentlichen U-förmigen Querschnitt mit zwischen den Schenkeln angeordnetem, eben verlaufendem, mit der Profilierung versehenem Nutengrund auf. Der eben verlaufende, mit Profilierungen versehene Nutengrund ermöglicht eine relativ geringe Tiefe der zum rückwärtigen Ende hin offenen Längsnuten und verhindert dadurch starke Querschnittsschwächungen des Einsteckendes. Der eben verlaufende, mit Profilierungen versehene Nutengrund ist relativ

2

einfach herstellbar und ermöglicht eine gute Reinigung.

Die Längsnuten werden zweckmässigerweise mittels sich in Achsrichtung am Einsteckende abwälzenden Segmenten in das Einsteckende eingewalzt. Die Herstellung der Längsnuten erfolgt somit spanlos. Eine solche spanlose Herstellung der Längsnuten ist gegenüber spanabhebender Bearbeitung wesentlich wirtschaftlicher und ermöglicht erhebliche Einsparungen. Ein weiterer wesentlicher Vorteil der spanlosen Herstellung besteht darin, dass der Werkstoff im Bereich der Längsnuten durch den Walzvorgang verdichtet wird und dadurch höhere Festigkeitswerte erreicht. Zusätzliche Operationen, wie beispielsweise das Entgraten, können bei spanloser Herstellung entfallen. Bei der Herstellung werden vorzugsweise alle Längsnuten gleichzeitig in das Einsteckende eingewalzt. Durch symmetrische Anordnung der Längsnuten gleichen sich dabei die entstehenden, recht hohen seitlichen Kräfte aus.

Wenigstens ein Teil der Segmente weist vorteilhaft eine der Profilierung des Nutengrundes entsprechende Gegenprofilierung auf. Die Herstellung der Längsnuten und der Profilierung am Nutengrund kann somit gleichzeitig erfolgen. Durch die formschlüssig ineinandergreifende Profilierung am Nutengrund und die Gegenprofilierung an den Segmenten wird beim Walzen der Längsnuten eine zu starke Längenänderung und dadurch ein Einziehen des Querschnitts im Bereich der Kanten verhindert. Ein solches Einziehen des Querschnittes bzw Ausrunden des Kantenbereiches ist insbesondere bei den der Uebertragung des Drehmomentes dienenden Längsnuten unerwünscht, da es dabei aufgrund der verringerten Auflagefläche zu einer sehr hohen, den Verschleiss fördernden Flächenpressung kommen kann.

Die Erfindung soll nachstehend, anhand der sie beispielsweise wiedergebenden Zeichnungen, näher erläutert werden. Es zeigen :

Fig. 1 ein erfindungsgemässes Werkzeug, in Ansicht ;

Fig. 2 einen Längsschnitt durch das in Fig. 1 dargestellte Werkzeug, entlang der Linie II-II ;

Fig. 3 einen Querschnitt durch das in Fig. 2 dargestellte Werkzeug, entlang der Linie III-III ;

Fig. 4 ein Verfahren zur Herstellung des erfindungsgemässen Werkzeuges, schematisch dargestellt ;

Fig. 5 ein weiteres Werkzeug, in Ansicht ;

Fig. 6 einen Querschnitt durch das in Fig. 5 dargestellte Werkzeug, entlang der Linie VI-VI ;

Fig. 7 einen Längsschnitt durch das in Fig. 5 dargestellte Werkzeug, entlang der Linie VII-VII ;

Fig. 8 ein weiteres erfindungsgemässes Werkzeug ; im Längsschnitt,

Fig. 9 einen Querschnitt durch das in Fig. 8 dargestellte Werkzeug, entlang der Linie IX-IX.

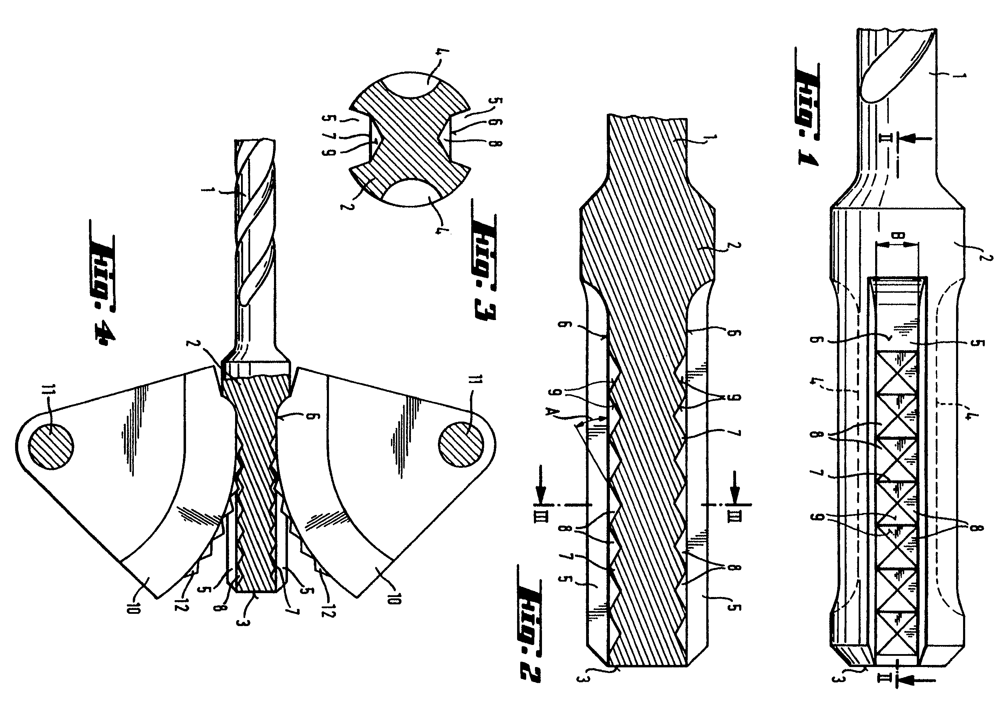

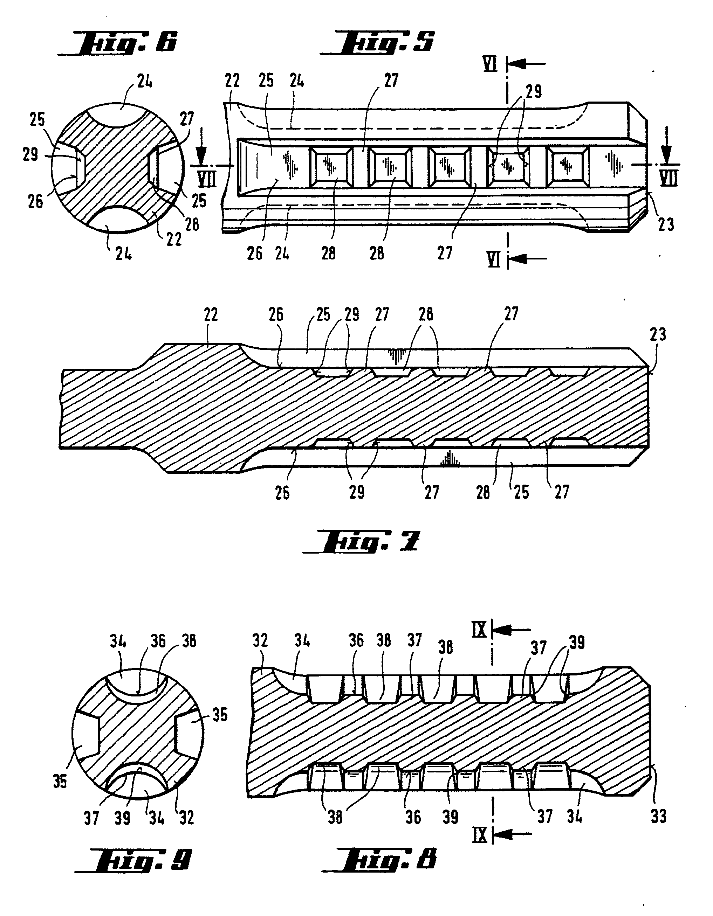

Das aus Fig. 1 bis 4 ersichtliche Werkzeug weist einen Schaft 1 sowie ein entgegen der Vorschubrichtung rückwärtig daran anschliessendes Einsteckende 2 auf. Das dem Schaft 1 gegenüberliegende rückwärtige Ende 3 des Einsteckendes 2 ist plan ausgebildet. Das Einsteckende 2 ist mit zwei einander diametral gegenüberliegenden, geschlossenen Längsnuten 4 und zwei gegenüber diesen um 90° versetzt angeordneten, zum rückwärtigen Ende 3 hin offenen Längsnuten 5 versehen. Die geschlossenen Längsnuten 4 sind im Querschnitt konkav gewölbt ausgebildet. Die offenen Längsnuten 5 weisen einen eben verlaufenden Nutengrund 6 auf. Der Nutengrund 6 ist mit einer zahnstangenförmigen Profilierung 7 versehen. Der Flankenwinkel A der Profilierung 7 gegenüber der Werkzeugachse beträgt 30° bis 60°. Die Profilierung 7 ist durch nebeneinanderliegend angeordnete, pyramidenförmige Vertiefungen 8 gebildet. Die Seitenlänge der pyramidenförmigen Vertiefungen 8 entspricht im wesentlichen der Breite B der Längsnut 5 im Nutengrund 6. Durch die pyramidenförmigen Vertiefungen 8 werden im wesentlichen in Achsrichtung wirkende Anschlagflächen 9 gebildet. Diese Anschlagflächen 9 bewirken beim Einsetzen des Werkzeuges in eine nicht dargestellte Aufnahme eines Antriebsgerätes ein Abstreifen von Verschmutzungen.

Fig. 4 zeigt schematisch die Herstellung des in Fig. 1 bis 3 dargestellten Werkzeuges. Dabei werden die zum rückwärtigen Ende 3 hin offenen Längsnuten 5 samt den Profilierungen 7 mittels sich in Achsrichtung am Einsteckende 2 abwälzenden Segmenten 10 in das Einsteckende 2 eingewalzt. Die Segmente 10 sind um Achsen 11 drehbar gelagert und werden mittels eines nicht dargestellten Antriebes synchron miteinander bewegt. Die Segmente 10 sind mit einer der Profilierung 7 des Nutengrundes 6 entsprechenden Gegenprofilierung 12 versehen. Die Gegenprofilierungen 12 verhindern beim Walzen der offenen Längsnuten 5 eine zu starke Längenänderung des Einsteckendes 2 und ermöglichen somit eine scharfkantige Ausbildung des Profils. Die offenen Längsnuten 5 sowie die Profilierungen 7 werden vorzugsweise in einem Arbeitsgang direkt bis zur vollen Tiefe in das Einsteckende 2 eingewalzt. Durch den Walzvorgang erfolgt eine Verdichtung des Werkstoffes und somit eine Erhöhung der Festigkeit im Bereich der Längsnuten 5.

Das aus Fig. 5 bis 7 ersichtliche Werkzeug weist ein Einsteckende 22 mit einem rückwärtigen Ende 23 auf. Das Einsteckende 22 ist mit geschlossenen Längsnuten 24 und zum rückwärtigen Ende 23 hin offenen Längsnuten 25 versehen. Die offenen Längsnuten 25 weisen am Nutengrund 26 eine Profilierung 27 auf, welche durch Vertiefungen 28 gebildet ist. Durch die Vertiefungen 28 werden am Nutengrund 26 im wesentlichen in Achsrichtung wirkende Anschlagflächen 29 gebildet. Die Anschlagflächen 29 bewirken bei der Herstellung des Einsteckendes 22 nachdem in Fig. 4 dargestellten Herstellverfahren ein axiales Einspannen des Einsteckendes 22 und verhindern dadurch beim Einwalzen der offenen und geschlossenen Längsnuten 24, 25 eine unbeabsichtigte Längenänderung des Einsteckendes 22.

Das aus Fig. 8 und 9 ersichtliche Einsteckende 32 weist ein rückwärtiges Ende 33 auf. Das Einsteckende 32 ist mit geschlossenen Längsnuten 34 und zum rückwärtigen Ende 33 hin offenen Längsnuten 35 versehen. Die geschlossenen Längsnuten 34 sind am Nutengrund 36 mit einer Profilierung 37 versehen. Die Profilierung 37 wird durch Vertiefungen 38 gebildet, welche zu den Kanten der geschlossenen Längsnuten 34 hin in der Tiefe auslaufend ausgebildet sind (Fig. 9). Durch die Vertiefungen 38 werden im wesentlichen in Achsrichtung wirkende Anschlagflächen 39 gebildet. Die Anschlagflächen 39 bilden Schultern, welche bei der Herstellung des Einsteckendes 32 einer Verlängerung des Einsteckendes 32 entgegenwirken.

## Patentansprüche

1. Bohr- oder Meisselwerkzeug mit Schaft (1) und entgegen der Vorschubrichtung rückwärtig daran anschliessendem Einsteckende (2), das axial verlaufende Längsnuten (4, 5) aufweist, welche der drehschlüssigen Verbindung und der axialen Halterung mit einer Aufnahme eines Antriebsgerätes dienen, **dadurch gekennzeichnet**, dass wenigstens ein Teil der Längsnuten (5) wenigstens im Nutengrund (6) eine Profilierung (7) mit im wesentlichen in Achsrichtung wirkenden Anschlagflächen (9) aufweist.

2. Werkzeug nach Anspruch 1, dadurch gekennzeichnet, dass die Profilierung (7) zahnstangenförmig ausgebildet ist.

3. Werkzeug nach Anspruch 2, dadurch gekennzeichnet, dass der Flankenwinkel (A) der Zähne der Profilierung (7) gegenüber der Werkzeugachse 30 bis 60° beträgt.

4. Werkzeug nach einem der Ansprüche 1 bis 3, dadurch gekennzeichnet, dass die Profilierung (7, 27, 37) durch Vertiefungen (8, 28, 38) gebildet ist.

5. Werkzeug nach Anspruch 4, dadurch gekennzeichnet, dass die Seitenlänge der Vertiefungen (8) im wesentlichen der Breite (B) der Längsnut (5) im Nutengrund (6) entspricht.

6. Werkzeug nach einem der Ansprüche 1 bis 5, dadurch gekennzeichnet, dass das Einsteckende (2) zwei einander diametral gegenüberliegende, axial geschlossene Längsnuten (4) und zwei gegenüber diesen um 90° versetzt angeordnete, zum rückwärtigen Ende (3) hin offene, im Nutengrund (6) mit der Profilierung (7) versehene Längsnuten (5) aufweist.

7. Werkzeug nach Anspruch 6, dadurch gekennzeichnet, dass die zum rückwärtigen Ende (3) hin offenen Längsnuten (5) einen im wesentlichen U-förmigen Querschnitt mit zwischen den Schenkeln angeordnetem, eben verlaufendem, mit der Profilierung (7) versehenem Nutengrund (6) aufweisen.

8. Werkzeug nach Anspruch 6, dadurch gekennzeichnet, dass die axial geschlossenen Längsnuten (34) mit einer Profilierung (37) am Nutengrund (36) versehen sind.

9. Verfahren zur Herstellung eines Werkzeuges mit Längsnuten nach einem der Ansprüche 1 bis 8, dadurch gekennzeichnet, dass die Längsnuten (4, 5) mittels sich in Achsrichtung am Einsteckende (2) abwälzenden Segmenten (10) in das Einsteckende (2) eingewalzt werden.

10. Vorrichtung zur Durchführung des Verfahrens nach Anspruch 9, dadurch gekennzeichnet, dass wenigstens ein Teil der Segmente (10) eine der Profilierung (7) des Nutengrundes (6) entsprechende Gegenprofilierung (12) aufweist.

## Claims

1. A drilling or chiselling tool having a shank (1) and an insertion end (2) which links rearwardly thereto contrary to the feed direction and which has axially extending longitudinal grooves (4, 5) which serve for the rotary-locking connection and the axial retention with a receiver of a drive tool characterised in that at least a part of the longitudinal grooves (5) at least in the groove bottom (6) has a profiling (7) with stop surfaces (9) acting substantially in the axial direction.

2. A tool according to claim 1, characterised in that the profiling (7) is rack-shaped in design.

3. A tool according to claim 1, characterised in that the flank angle (A) of the teeth of the profiling (7) relative to the tool axis amounts to 30 up to 60°.

4. A tool according to one of claims 1 to 3, characterised in that the profiling (7, 27, 37) is formed by depressions (8, 28, 38).

5. A tool according to claim 4, characterised in that the lateral length of the depressions (8) corresponds substantially to the width (B) of the longitudinal groove (5) in the groove bottom (6).

6. A tool according to one of claims 1 to 5, characterised in that the insertion end (2) has two diametrically opposed, axially closed longitudinal grooves (4) and, arranged offset by 90° relative to these, two longitudinal grooves (5) which are open towards the rearward end (3) and are provided in the groove bottom (6) with the profiling (7).

7. A tool according to claim 6, characterised in that the longitudinal grooves (5) which are open towards the rearward end (3) have a substantially U-shaped cross-section with the groove bottom (6) arranged between the limbs and extending flat and provided with the profiling (7).

8. A tool according to claim 6, characterised in that the axially closed longitudinal grooves (34) are provided with a profiling (37) on the groove bottom (36).

9. A method of producing a tool having longitudinal grooves according to one of claims 1 to 8, characterised in that the longitudinal grooves (4, 5) are rolled into the insertion end (2) by means of segments (10) rolling in the axial direction on the insertion end (2).

10. A device for carrying out the method according to claim 9, characterised in that at least a part of the segments (10) has a counter-profiling (12) corresponding to the profiling (7) of the groove bottom (6).


**Revendications**

1. Outil de perçage ou de burinage, comprenant une tige (1) à laquelle fait suite vers l'arrière, dans le sens opposé à la direction d'avancement, une extrémité d'insertion (2) qui présente des gorges longitudinales (4, 5) s'étendant dans le sens axial et destinées à assurer la solidarisation en rotation et la fixation axiale avec un logement d'un appareil d'entraînement, **caractérisé en ce** qu'au moins une partie des gorges longitudinales (5) présente au moins au fond (6) des gorges un profilage (7) avec des surfaces d'arrêt (9) agissant sensiblement dans le sens axial.

2. Outil selon la revendication 1, caractérisé en ce que le profilage (7) est conformé en crémaillère.

3. Outil selon la revendication 2, caractérisé en ce que l'angle de pression (A) des dents du profilage (7) par rapport à l'axe de l'outil est de 30 à 60°.

4. Outil selon l'une des revendications 1 à 3, caractérisé en ce que le profilage (7, 27, 37) est constitué par des creux (8, 28, 38).

5. Outil selon la revendication 4, caractérisé en ce que la longueur des côtés des creux (8) correspond sensiblement à la largeur (B) de la gorge longitudinale (5) au fond (6) de la gorge.

6. Outil selon l'une des revendications 1 à 5, caractérisé en ce que l'extrémité d'insertion (2) comporte deux gorges longitudinales (4) diamétralement opposées et fermées dans le sens axial et deux gorges longitudinales (5) décalées de 90° par rapport à ces dernières, ouvertes en direction de l'extrémité postérieure (3) et munies d'un profilage (7) au fond (6) des gorges.

7. Outil selon la revendication 6, caractérisé en ce que les gorges longitudinales (5) ouvertes en direction de l'extrémité postérieure (3) présentent une section transversale sensiblement conformée en U, avec un fond de gorge (6) plan disposé entre les branches et muni du profilage (7).

8. Outil selon la revendication 6, caractérisé en ce que les gorges longitudinales (34) fermées dans le sens axial sont munies d'un profilage (37) au fond (36) des gorges

9. Procédé pour la fabrication d'un outil avec des gorges longitudinales selon l'une quelconque des revendications 1 à 8, caractérisé en ce que les gorges longitudinales (4, 5) sont laminées dans l'extrémité d'insertion (2) au moyen de segments (10) roulant dans le sens axial sur l'extrémité d'insertion (2).

10. Dispositif pour la mise en oeuvre du procédé selon la revendication 9, caractérisé en ce qu'au moins une partie des segments (10) présente un profilage conjugué (12) correspondant au profilage (7) du fond (6) des gorges.

Fig. 1

Fig. 2

Fig. 3

Fig. 4

# Fig. 6

# Fig. 5

# Fig. 7

# Fig. 9

# Fig. 8